# EUROPÄISCHE PATENTSCHRIFT

(11) **EP 2 206 737 B1**
(45) Veröffentlichungstag und Bekanntmachung des Hinweises auf die Patenterteilung: **13.02.2013**
(21) Anmeldenummer: 09177856.3
(22) Anmeldetag: 03.12.2009
(51) Int. Cl.: C08G 77/06, B29B 7/74, B29C 47/38, B29C 47/76

(54) **Verfahren zur kontinuierlichen Herstellung von hochviskosen Siliconmassen**
Process for the continuous preparation of high-viscosity silicone compositions
Procédé de préparation en continu de silicone de viscosité élevé

(30) Priorität: 11.12.2008 DE 102008054536
(43) Veröffentlichungstag der Anmeldung: 14.07.2010
(73) Patentinhaber: Wacker Chemie AG, 81737 München (DE)
(72) Erfinder: Schuster, Johann, Dr., 84547, Emmerting (DE); Dietl, Stefan, Dr., 84489, Burghausen (DE); Schneiderbauer, Stefan, Dr., 84503, Altötting (DE)
(74) Vertreter: Fritz, Helmut

(56) Entgegenhaltungen:
- EP-A- 1 468 803

## Beschreibung

Die Erfindung betrifft ein Verfahren zur Herstellung von Organopolysiloxanzusammensetzungen in einer Knetkaskade mit wenigstens zwei in Reihe nebeneinander angeordneten Knetkammern und einem kontinuierlich betriebenen Doppelmuldenkneter.

In der EP 570387 A ist ein Verfahren zur kontinuierlichen Herstellung von HTV-Siliconmassen beschrieben, bei dem die Füllstoffeinarbeitung in das Polysiloxan und die Entgasung in einem Schritt in einem oszillierenden Einwellenpilgerschrittkneter erfolgt. Es ist allerdings eine Trennung der Maschine möglich, so daß im ersten Kneter der Mischvorgang und im zweiten Kneter der Entgasungsvorgang stattfinden kann. Aufgrund der Phaseninversion, trockenen Reibung und der Mechanodestruktion hochpolymerer Polyorganosiloxane ist die Lagerstabilität reduziert. Auch können mit diesem Maschinenkonzept keine befriedigenden Durchsätze erreicht werden.

Eine Verfahrensweiterentwicklung wird beschrieben in EP 1033389 A. Zur Verbesserung vor allem der Lagerstabilität wird das Verfahren erweitert um eine Kautschukrückführung, die eine Phaseninversion verhindern und damit die Tendenz zur Verstrammung und Brüchigkeit der so hergestellten HTV-Massen mindern soll. Zweistufige Verfahren werden in EP 1033389 A nicht erwähnt. Das Verfahren ist durch die Produktrückführung technisch sehr aufwendig, so daß eine wirtschaftliche Fahrweise nicht möglich ist. Auch der Durchsatz ist bei diesem Verfahren unbefriedigend, da die Produktrückführung die Raum-ZeitAusbeute der Anlage stark reduziert.

EP 1110696 A beschreibt ein zweistufiges Verfahren zur Herstellung von HTV-Siliconmassen. Hierbei wird im 1. Verfahrensteil in einem gleichlaufenden Zweiwellenextruder die Vermischung von Füllstoff und Siliconpolymer und auch Beladungsmitteln zur Hydrophobierung und Weichmacher vorgenommen. Im 2.Verfahrensteil wird die Mischung dann fertig compoundiert und in einem oszillierenden Einwellenpilgerschrittkneter entgast. Das Verfahren von EP 1110696 A soll sich gegenüber EP 570387 A gerade in Richtung Durchsatz und verbesserter Füllstoffverteilung hervorheben. Allerdings beschreibt EP 570387 A, daß zweiwellenmaschinen hinsichtlich Maschinenverschleiß und Metallabrieb problematisch sind, unerwünschte Graufärbungen der produzierten HTV-Massen können die Folge sein. Dies trifft insbesondere zu für sehr hochgefüllte steife Mischungen.

EP 807509 A beschreibt die kontinuierliche Herstellung von lagerstabilen Organopolysiloxanzusammensetzungen unter Verwendung einer speziellen Knetmaschinenkaskade. Zielrichtung sind Grundmassen für additionsvernetzende Flüssigkautschuke. Eine Entgasung der Masse erfolgt nur über einen Entgasungsbehälter, nicht über eine speziell konzipierte Maschine. Gemäß EP 807509 A ist eine Herstellung von HTV-Massen unter Verwendung einer Knetkaskade auch möglich. Auf Grund nicht vorhandener bzw. ungeeigneter Entgasungsmöglichkeiten sind HTV- Kautschuke, gefertigt nach diesem Verfahren, nicht einsetzbar.

EP 1468803 A beschreibt ein Verfahren, bei dem eine Knetkaskade bestehend aus wenigstens zwei in Reihe nebeneinander angeordneter Knetkammern, die jeweils zwei achsparallele gleichsinnig oder gegensinnig antreibbare Knetwerkzeuge enthalten und die durch quer zu den Achsen der Knetwerkzeuge passierbare Öffungen miteindander verbunden sind. von dieser Knetkaskade wird der schon plastische Rohkautschuk in einen Pilgerschrittkneter gepumpt in dem das Material geknetet und entgast werden kann. Dieses Verfahren hat den Nachteil, dass technische Grenzen erreicht sind, die Durchsätze gemittelt über alle Produkte von größer 1500 kg / h nicht zulassen. Limitierend sind verschiedene Faktoren. Zum einen wird der Füllstoffeintrag limitierend und zum anderen die Verweilzeit, da bei Durchsatzsteigerungen unweigerlich die mittlere Verweilzeit absinkt was sich negativ auf die Qualität auswirkt. Besonders deutlich wird der negative Einfluß in den Eigenschaften Gelbfärbung bei peroxidischer Vernetzung, Blasenbildung bei der Extrusion sowie der Lagerstabilität. Bei dem in EP 1468803 A beschriebenen Verfahren sind keine Puffereinrichtungen enthalten, so dass bei einer Störung sofort ein Rückstau entsteht und die Anlage abgefahren werden muss oder Rohkautschuk ausgeschleust werden muss der dann nochmals in einer anderen Anlage nachbearbeitet werden muss.

Gegenstand der Erfindung ist ein kontinuierliches Verfahren zur Herstellung von Organopolysiloxanzusammensetzungen (A) mit einer bei 25°C gemessenen Viskosität von mindestens 500 Pa.s., bei dem Organopolysiloxane (O) und Füllstoffe (F) in einer ersten Verfahrensstufe in einer Knetkaskade mit wenigstens zwei in Reihe nebeneinander angeordneten Knetkammern, die jeweils zwei achsparallele, gleich- oder gegensinnig antreibbare Knetwerkzeuge enthalten und die durch quer zu den Achsen der Knetwerkzeuge passierbare Öffnungen miteinander verbunden sind, wobei die erste Knetkammer eine Beschickungsöffnung und die letzte Knetkammer eine Austragsöffnung aufweisen, zu Rohmischungen vermischt und geknetet werden und die Rohmischungen in einer zweiten Verfahrensstufe in einem kontinuierlich betriebenen Doppelmuldenkneter mit Austragsschnecke bei 100°C bis 250°C geknetet und entgast werden.

Im erfindungsgemäßen Verfahren sind gegenüber dem Verfahren von EP 1468803 A doppelt bis dreifach höhere Durchsätze fahrbar. Darüber hinaus kann die Qualität verbessert werden. Weiterhin weist das Verfahren den verfahrenstechnischen Vorteil auf, dass aufgrund der guten Pufferwirkung des Doppelmuldenkneters bei kleinen Störungen im Kühlband, Strainer und Verpackungsbereich nicht die gesamte Anlage ausgefahren werden muss.

Im erfindungsgemäßen Verfahren verfügt jede Knetkammer der Knetkaskade über einen separaten Antrieb und somit kann die Steuerung der Intensität des Misch- Kompaktier- und Knetprozesses kammerspezifisch sehr exakt festgelegt werden.

Eine derartig exakte Einflußnahme auf den Misch- Kompaktier- und Knetprozesses ist mit einer Zweiwellenmaschine, so wie in EP 1110696 A beschrieben, nicht möglich. Die Kautschukmasse ist spätestens in der letzten Kammer der Knetkaskade vollkommen homogen wie ein fertiger Kautschuk, zudem hat sie eine über die Antriebe der einzelnen Knetkammern reproduzierbar zugeführte Knetleistung erfahren.

Die erfindungsgemäß eingesetzte Knetkaskade ist eine Knetmaschine und erlaubt eine Steuerung der Intensität des Knetprozesses und der Verweilzeit, weil Drehzahl und Drehrichtung der Knetwerkzeuge in den einzelnen Knetkammern unnabhängig voneinander beliebig einstellbar sind.

Da in der Knetkaskade kein freier Gasraum vorhanden ist, kann auf Schutzgas verzichtet werden. Vorzugsweise wird im Einlauftrichter für die Zugabe der Füllstoffe mit Stickstoff inertisiert.

Der Produktaustrag aus der Knetkaskade stellt kein Problem dar, weil die fertigen Zusammensetzungen durch die Knetwerkzeuge leicht zur Austragsöffnung befördert werden können. Die letzte Knetkammer weist vorzugsweise Pumpflügel für den Produktaustrag auf.

Die Knetkaskade besteht vorzugsweise aus maximal 10 Knetkammern, vorzugsweise sind maximal 6 Kammern ausreichend. Dabei weist die letzte Kammer vorzugsweise Pumpflügel für den Produktaustrag auf. Vorzugsweise wird in die erste Kammer Organopolysiloxan (O) und Strukturverbesserer (S) dosiert. Auch kann die Zudosierung z.B. des/der Füllstoffe(s) (F) in eine oder mehrere Kammern(n) der Knetkaskade erfolgen. Vorzugsweise wird alles Organopolysiloxan (O) in die erste Kammer dosiert. Es ist auch möglich, einen Teil des Organopolysiloxans (O) in eine spätere Kammer zu dosieren, z.B um die Viskosität der Organopolysiloxanzusammensetzung (A) zu erniedrigen. In alle Kammern können die erforderlichen Füllstoffe (F) dosiert werden, vorzugsweise wird in die letzte und die erste Kammer kein Füllstoff (F) dosiert. Dabei ist es möglich, die gesamte erforderliche Füllstoffmenge nur in beispielsweise einer/zwei/drei oder vier der ersten Kammern zuzugeben. Bevorzugt wird Füllstoff (F) in die Kammern 2 und 3 dosiert. Eine Füllstoffverteilung anteilig über alle Kammern ist allerdings auch möglich. Werden Strukturverbesserer (S) eingesetzt, so werden diese vorzugsweise in die ersten Kammern, insbesondere in der ersten Kammer dosiert. Vorzugsweise wird in die letzte Kammer kein Strukturverbesserer (S) dosiert. Vorzugsweise weist die Knetkaskade mindestens drei, insbesondere mindestens fünf Knetkammern auf.

Zwischen einzelnen oder allen Knetkammern können Siebe, Stauscheiben oder Schieber zur Stauung der Organopolysiloxanzusammensetzungen (A) angebracht sein. Diese Elemente können hinsichtlich ihrer Lage und der von Ihnen freigebbaren Durchlaßöffnung verstellbar sein. Dadurch läßt sich die Verweilzeit in den einzelnen Kammern beeinflussen.

Vorzugsweise sind die Knetwerkzeuge Knetschaufeln, Walzen oder Polygonscheiben.

Vorzugsweise sind in der Knetmaschine neben der Beschickungsöffnung der ersten Knetkammer weitere Beschickungsöffnungen vorhanden, die in die einzelnen Knetkammern führen oder zwischen zwei Knetkammern angeordnet sind. Vorzugsweise weist jede Knetkammer eine Beschickungsöffnung auf. Insbesondere sind die Beschickungsöffnungen der ersten 2, 3 oder 4 Knetkammern für die Beschickung mit Feststoff geeignet und die anderen Beschickungsöffnungen für die Zudosierung von Flüssigkeiten vorgesehen.
Vorzugsweise verfügt jede Knetkammer über einen separat regelbaren Antrieb, der jeweils vorzugsweise eine Drehmomentmessung aufweist. Das Drehmoment ist ein Maß für die Viskosität der Mischung in der Kammer.

Vorzugsweise sind die Knetkammern beheizbar und/oder kühlbar, insbesondere einzeln bei unterschiedlicher Temperatur betreibbar. Beim Kneten entsteht Friktionswärme, die vorzugsweise durch Kühlen teilweise abgeführt wird, um Überhitzung der Zusammensetzung zu vermeiden.

Vorzugsweise sind die Knetwerkzeuge fliegend gelagert. Die lagerseitige Gehäuse-Abschlußwandung ist dann mit Öffnungen für die Antriebswellen der Knetwerkzeuge versehen. Vorzugsweise hat das Gehäuse der Knetkammern eine quer zu den Werkzeugachsen verlaufende Trennstelle, so daß der der Lagerung abgewandte Gehäuseteil in axialer Richtung der Antriebswellen von der Trennstelle und den Knetwerkzeugen wegbewegbar ist. Eine derartig ausgestaltete Knetmaschine ist besonders leicht zu reinigen.

Eine solche Knetmaschine ist in der EP 807509 A beschrieben.

Die Massetemperaturen in den Knetkammern liegen bei dem erfindungsgemäßen Verfahren bei höchstens 280°C, vorzugsweise höchstens 240°C.

Nach der letzten Knetkammer wird der Kautschuk bevorzugt über ein kurzes flexibles Zwischenstück direkt in den Doppelmuldenkneter gepumpt. Es kann aber auch ein Förderorgan als Verbindungsglied benutzt werden. Der Doppelmuldenkneter ist vorzugsweise mit zwei Sigma Knetschaufeln und einer Austragsschnecke ausgestattet. Die Knetschaufeln verfügen vorzugsweise jeweils über einen separaten Antrieb und sind vorzugsweise heiz- kühlbar. Die Drehzahl kann vorzugsweise stufenlos separat für jede Schaufel verstellt werden. Vorzugsweise ist eine Drehrichtungsänderung möglich.

Der Füllgrad des Doppelmuldenkneters wird vorzugsweise bei 40 bis 60% konstant gehalten, d. h die Austragsschnecke wird so geregelt, dass Eintrag und Austrag im Gleichgewicht stehen. Im Falle einer kleinen Störung in den dem Kneter nachgeschalteten Aggregaten kann das restliche Knetervolumen als Puffer genutzt werden, was den gesamten Prozess sehr robust macht und den Anteil von out of spec Ware minimiert.
Der Kneter wird vorzugsweise bei niedrigem Unterdruck von 1 bis 150mbar absolut betrieben. Die Produkttemperatur wird konstant gehalten und liegt vorzugsweise je nach Produkt bei mindestens 100, insbesondere bei mindestens 130°C, vorzugsweise höchstens bei 250°C, insbesondere höchstens 220°C.

Neben den Knetschaufeln ist vorzugsweise auch der Trog mit einem Doppelmantel ausgestattet um die Temperatur des Produktes steuern zu können.

Die mittlere Verweilzeit des Produktes im Kneter kann über einen weiten Bereich variiert werden. Bevorzugt sind mindestens 5 min, insbesondere mindestens 30 min, vorzugsweise höchstens 5 h, insbesondere höchstens 3 h.

Um eine enge Verweilzeitverteilung im Kneter erreichen zu können sind Eintrittsöffung und Austrittsöffnung im Kneter auf maximalen Abstand gehalten. Die Geometrie der Schaufeln ist so gewählt, dass das Produkt möglichst lange von der Austrittsöffnung fern gehalten wird.

Die Organopolysiloxanzusammensetzung (A) durchläuft bei der Herstellung beide Verfahrensschritte ohne Produktzwischenlagerung.

Die weitere Aufarbeitung der dann gut gekneteten und entgasten Organopolysiloxanzusammensetzung (A) ist unproblematisch und nicht Gegenstand der Erfindung.

Der Füllstoffgehalt der Organopolysiloxanzusammensetzungen (A) liegt bei 5 bis 80 Gew.-%, vorzugsweise bei 10 bis 50 Gew.-%. Besonders bevorzugt werden Organopolysiloxanzusammensetzungen (A) mit einem Füllstoffgehalt von 20 bis 40 Gew.-% hergestellt.

Als Füllstoffe (F) kommen sämtliche üblicherweise in Siliconmassen eingesetzte Füllstoffe in Frage, wobei auch Mischungen von verschiedenen Füllstoffen eingesetzt werden können. Geeignete Füllstoffe (F) sind beispielsweise Kieselsäuren " Quarzmehle, Ruße, Metalloxide, -carbonate, - sulfate,-silicate, -nitride, Diatomeenerde, Tone, Kreiden, Glimmer, Metallpulver, Aktivkohle, Pulver organischer Kunststoffe etc. Wichtig ist, daß die Viskosität der füllstoffhaltigen Organopolysiloxanzusammensetzungen (A) aufgrund des Füllstoffgehaltes deutlich höher ist als die Viskosität des Organopolysiloxans (O), welches auf kontinuierliche Weise in diese füllstoffhaltige Siliconmasse eingemischt werden soll. Bevorzugt sind verstärkende Füllstoffe (F), also Füllstoffe mit einer spezifischen Oberfläche nach BET von mindestens 50 m²/g, vorzugsweise 50-500 m²/g, wie pyrogen erzeugte Kieselsäure, unter Erhalt der Struktur entwässerte Kieselsäurehydrogele, also sog. Aerogele, andere Arten von gefälltem Siliciumdioxid sowie Ruße. Die besonders bevorzugten pyrogen erzeugten Kieselsäuren, gefällten Kieselsäuren und Ruße können gegebenenfalls einer Oberflächenbehandlung unterworfen worden sein, um z.B. deren Dispergierbarkeit zu verbessern. Die oxidischen verstärkenden Füllstoffe (F) können vorhydrophobiert sein, vorzugsweise mit einem durch die Hydrophobierung erhaltenen Kohlenstoffgehalt von mindestens 0,5. Es können auch Gemische von vorhydrophobierten und nicht vorhydrophobierten oxidischen verstärkenden Füllstoffen (F) eingesetzt werden.
Enthalten sein können insbesondere auch die in reiner Form bei Raumtemperatur festen Siliconharze vom Typ der M_{w}DₓT_{y}Q_{z}-Siliconharze.

Bei den der Organopolysiloxanzusammensetzung (A) zugrunde liegenden Organopolysiloxane (O) kann es sich um eines oder um eine Mischung unterschiedlicher Organopolysiloxane (O) handeln. Im Grunde können sämtliche, dem Fachmann bei der Herstellung von HTV-, LSR-, RTV-1 und RTV-2-Massen wohl bekannten, hinlänglich beschriebenen Organopolysiloxane (O) eingesetzt werden. Hierzu zählen lineare, verzweigte, cyclische oder harzartige Organopolysiloxane, die gegebenenfalls, meist zum Zwecke der Vernetzbarkeit funktionelle Gruppen enthalten können. Vorzugsweise werden lineare Organopolysiloxane (O) eingesetzt, wie Polydimethylsiloxane mit einem Polymerisationsgrad von 50 bis 9000. Bevorzugte Organoreste der Organopolysiloxane (O) sind Methyl, Phenyl, Vinyl und Trifluorpropyl, besonders bevorzugt ist der Methyl-Rest. Die in den Polyorganosiloxanen bevorzugt befindlichen funktionellen Gruppen sind -SiOH, -SiOR, Si-Vinyl und -SiH, besonders bevorzugt ist die Vinyl-Gruppe. Besonders bevorzugte Organopolysiloxane (O sind die üblicherweise zur Herstellung von hitzehärtenden HTV-Siliconmassen eingesetzten Organopolysiloxane (O) mit einem Brabenderwert von 200 bis 900 daNm bei 25°C gemessen, insbesondere von 400 bis 700 daNm.

Die Zusammensetzung der Organopolysiloxane (O) entspricht vorzugsweise der durchschnittlichen allgemeinen Formel (1)

R¹ₐR²_{b}SiO_{(4-a-b)/2} (1),

in der die Reste
- **R¹**: gleiche oder verschiedene einwertige Si-gebundene Reste darstellen, ausgewählt aus -H -OH, -OR, wobei R einen C₁- C₁₀-Kohlenwasserstoffrest bezeichnet, sowie gegebenenfalls halogen- oder cyanosubstituierte, gegebenenfalls über eine zweiwertige organische Gruppe an Silicium gebundene C₁-C₁₀- Kohlenwasserstoffreste, die mindestens eine aliphatische Kohlenstoff-Kohlenstoff Mehrfachbindung enthalten,
- **R²**: gleiche oder verschiedene einwertige Si-gebundene, gegebenenfalls halogen- oder cyanosubstituierte C₁-C₁₀- Kohlenwasserstoffreste sind, die keine aliphatischen Kohlenstoff-Kohlenstoff Mehrfachbindungen enthalten,
- **a**: eine nicht negative Zahl von 0 bis 1 ist, und
- **b**: eine nicht negative Zahl von 1 bis 2,1 ist.

**R¹** ist vorzugsweise eine Alkenylgruppe, die einer Reaktion mit einem SiH-funktionellen Vernetzungsmittel oder mit einem Peroxid zugänglich ist. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen an Silicium der Polymerkette gebunden sein können, bestehen beispielsweise aus Oxyalkyleneinheiten, wie solche der allgemeinen Formel (2)

-(O)ₚ[(CH₂)_{q}O]ᵣ- (2),

in der
- **p**: die Werte 0 oder 1, insbesondere 0,
- **q**: Werte von 1 bis 4, insbesondere 1 oder 2 und
- **r**: Werte von 1 bis 20, insbesondere von 1 bis 5 bedeuten.

Die Oxyalkyleneinheiten der allgemeinen Formel (2) sind links an ein Siliciumatom gebunden.

Die Reste **R¹** können in jeder Position der Polymerkette, insbesondere an den endständigen Siliciumatomen, gebunden sein.

**R²** weist vorzugsweise 1 bis 6 Kohlenstoffatome auf. Insbesondere bevorzugt sind Methyl und Phenyl.

Die Struktur der Polyorganosiloxane der allgemeinen Formel (1) kann linear, cyclisch oder auch verzweigt sein. Der Gehalt an zu verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%.

Besonders bevorzugt ist die Verwendung Vinylgruppen enthaltender Polydimethylsiloxane, deren Moleküle der allgemeinen Formel (3)

(ViMe₂SiO_{1/2})_{c}(ViMeSiO)_{d}(Me₂SiO)ₑ(Me₃SiO_{1/2})_{f} (3),

entsprechen, wobei **Vi** Vinylrest und **Me** Methylrest bedeuten, die nichtnegativen ganzen Zahlen **c, d, e** und **f** folgende Relationen erfüllen: **c+d** ≥ 1, **c+f** = 2, 1000< **(d+e)** <9000, vorzugsweise 3000<**(d+e)**<7000, und 0<**(d+1)/(d+e)**<1, vorzugsweise 0<**(d+1)/(d+e)**<0.1.

Die Organopolysiloxanzusammensetzungen (A) können Zusätze (z) enthalten, die der Einstellung spezieller Eigenschaften dienen, insbesondere Verarbeitungshilfsmittel, wie Strukturverbesserer (S); Dispergierhilfsmittel; Hydrophobiermittel, beispielsweise Silazane, silanolhaltige Oligosiloxane und Destrukturierungsagenzien.
Besonders bevorzugte Zusätze sind die der Einarbeitung hydrophiler Füllstoffe (F), wie hydrophiler pyrogener oder gefällter Kieselsäure, dienenden Hydrophobiermittel, wie silanolhaltige Oligosiloxane und sowie trimethylsilylendständige Oligodimethylsiloxane.

Als Strukturverbesserer (S) sind bevorzugt Organopolysiloxane mit einer bei 25°C gemessenen Viskosität von 10 bis 200 mPa.s. insbesondere 20 bis 150 mPa.s. Bevorzugt sind silanolhaltige Oligosiloxane, trimethylsilyl-endblockierte Dimethyl(oligo- oder poly)siloxane. Vorzugsweise werden die Reste der Organopolysiloxane als Strukturverbesserer (S) ausgewählt aus Methyl-, Phenyl-, Vinyl- und Hydroxylgruppen.

Bei den nach dem erfindungsgemäßen Verfahren hergestellten Organopolysiloxanzusammensetzungen (A) handelt es sich um höherviskose Siliconmassen mit einer bei 25°C gemessenen Viskosität von mindestens 500 Pa.s. Das erfindungsgemäße Verfahren eignet sich besonders zur Herstellung höherviskoser Organopolysiloxanzusammensetzungen (A) mit einer bei 25°C gemessenen Brabenderplastizität von 100 bis 1.000 daN.m, sowie höchstviskose Organopolysiloxanzusammensetzungen (A) mit einer nach Mooney bestimmten Viskosität von 10 bis 200 Mooney-Einheiten (Mooney-Endwert, ML(1+4), 23°C, DIN 53523).

Das erfindungsgemäße Verfahren eignet sich besonders zur Herstellung hochgefüllter, hochviskoser Organopolysiloxanzusammensetzungen (A), hochviskosen Siliconpasten und hochgefüllten Siliconmasterbatchen. Bei den hitzehärtbaren HTV-Organopolysiloxanzusammensetzungen (A1) kann es sich auch um Basismischungen handeln, die der Herstellung von vernetzungsfähigen HTV-Fertigmassen dienen. Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke 0,10 MPa (abs.). Alle Viskositäten wurden bei 20°C bestimmt.

Allen das erfindungsgemäße Verfahren demonstrierenden Beispielen sowie Vergleichsbeispielen wurde eine Siliconkautschukmasse folgender Zusammensetzung zugrunde gelegt:

### HTV-Festpolymer:

100 Gew.-Teile eines HTV-Festpolymeres, welches bei einer Temperatur von 25°C und einer Scherrate von 0,81 1/sec eine Viskosität von ca. 20000 Pa.s aufweist und gemäß des ¹H-NMR-Spektrums folgende zahlenmittlere Zusammensetzung besitzt:

Vi-Si(Me)₂-[OSi(Me)₂]ₘ-[OSiMeVi]ₙ-OSi(Me)₂-Vi,

wobei Me den Methylrest und Vi den vinylrest bezeichnen, n+m ca. 6000 ist und m/n ca. 3000 beträgt.

### Strukturverbesserer:

2-16,7 Gew.-Teile eines Strukturverbesserers, welcher gemäß des ²⁹Si-NMR-Spektrums folgende zahlenmittlere Zusammensetzung besitzt:

HO-Si(Me)₂-[OSi(Me)₂]ₘ-OSi(Me)₂-OH,

wobei m ca. 14 ist und die bei einer Temperatur von 25°C gemessene Viskosität 41 mm²/s beträgt.

### Kieselsäure:

40-50 Gew.-Tl. einer unter der Bezeichnung Wacker HDK^{®} T30 erhältliche pyrogen erzeugte Kieselsäure mit einer nach BET gemessenen spezifischen Oberfläche von 300 m²/g.

### Beispiel 1: erfindungsgemäßes Verfahren

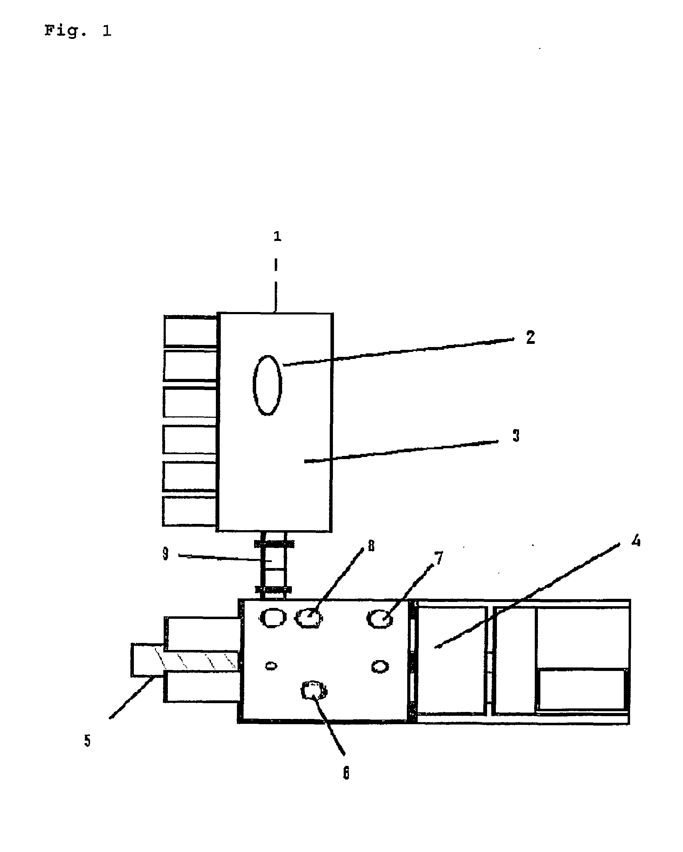

Das Verfahren wird anhand Fig. 1 beschrieben:
Für die 1. Stufe wurde eine Conterna^{®} Knetkaskade (3) von IKA Maschinenbau Janke & Kunkel GmbH & Co.KG, Staufen eingesetzt. Die Knetkaskade (3) wies 6 Kammern zu je 10 1 Volumen auf. Der Gesamtdurchsatz betrug 200kg/h.

In die Zuführung zur Kammer 1 (1) wurde das Polymer eindosiert (120kg/h), zudem der Strukturverbesserer (20kg/h), in die Zuführung (2) zur Kammer 2 der Füllstoff (60kg/h). Der Gesamtdurchsatz betrug folglich ca. 200kg/h. Die Drehzahlen in den Kammern 1-4 lagen bei 35 UpM. An Hand der Leistungsaufnahme der Einzelantriebe der Kammern konnte registriert werden, dass in der 2. und 3. Knetkammer wohl eine brockige Konsistenz der Masse vorlag. In der 4. Knetkammer war die Leistungaufnahme ruhiger und höher, hier lag eine homogene zusammenhängende Masse vor. Kammern 1 - 4 wurden mit 35 Upm betrieben. In den Kammern 5 und 6 wurden mit 40 UpM nachgeknetet und gleichzeitig erfolgte aus Kammer 6 der Produktaustrag. Die 6 Kammern wurden nicht gekühlt und nicht geheizt, die Temperaturen zogen von ca. 45°C in der 1. Kammer auf ca. 150°C in der 6. Kammer an.

Der aus Kammer 6 ausgetragene Rohkautschuk wurde über ein Übergangsstück (9) kontinuierlich (30kg/h) entnommen und über einen AZ-Feeder der Fa. Krauss Maffei, der als Förderorgan diente, kontinuierlich in einen 1001 Sigma-Kneter (4) mit Lampe (6), Vakuumanschluss (7), Schauglas (8) und Austragsschnecke (5) dosiert. Der Kneter (4) wurde auf ca 200°C aufgeheizt und auf einen Unterdruck von ca 100mbar evakuiert. Nachdem der Kneter (4) zur Hälfte gefüllt war, wurde kontinuierlich über die Austragsschnecke (5) ausgetragen. Die Austragsmenge wurde so eingestellt, dass der Füllgrad des Kneters (4) in etwa konstant blieb.

Der Kautschuk wurde
a)-mit 0,7% Dicumylperoxid(Vernetzer 1) 15 Minuten bei 165°C oder
b)-mit 1,5% Di(2,4-)Dichlorobenzoyl) peroxide (50%ig) (Vernetzer 2) 10 Minuten bei 135°C
in einer beheizten Presse zwischen Platten vulkanisiert. Die Vulkanisate wurden anschließend im Umluftschrank 4h bei 200°C getempert, danach das Aussehen dieser Vulkanisate beurteilt, also den Grad der Verfärbung.

Es wurden drei unterschiedliche Produkte 1-3 hergestellt. 1h nach erreichen einer stabilen kontinuierlichen Produktion wurde jeweils eine Probe gezogen, die dann getestet wurden.

**Tabelle 1: Versuchsbedingungen**

| Produkt: | mittlere Verweilzeit, | Temperatur im Sigma-Kneter | Unterdruck im Sigma-Kneter |
|---|---|---|---|
| 1 | 2h | 185°C | 100mbar |
| 2 | 1,5h | 180°C | 150mbar |
| 3 | 2h | 200°C | 140mbar |

**Tabelle 2: Ergebnisse**

| Produkt: | Compression Set | Farbe B-Wert | Shore-A Härte |
|---|---|---|---|
| 1 | 16 | 12 | 39 |
| 2 | 18 | 7,5 | 58 |
| 3 | 18 | 9 | 70 |

Je geringer der B-Wert, desto geringer ist die Gelbfärbung.

Die Farbe kann durch drei Koordinaten beschrieben werden die L a b genannt werden. L ist die Helligkeitsaches, b ist die gelbblau-Achse und a die rot-grün-Achse.

### Nicht erfindungsgemässes Vergleichsbeispiel analog dem Verfahren von EP 1468803 A

15 kg/h der wie in Beispiel 1 der Conterna^{®} Knetkaskade (3) entnommenen Rohmischung wurde ohne Zwischenlagerung einem Kneter der Firma "Buss Compounding Systems AG" vom Typ LR 100/19D zugeführt.
Der Kneter gliederte sich in 5 Zonen(Schüsse) mit folgendem Aufbau: 1. Zone 3D, 2. - 5. Zone jeweils 4D. Alle Zonen waren über Stauringe voneinander getrennt. Mit Hilfe einer Vakuum-Wasserringpumpe wurden die Zonen 2 -5 mit einem Vakuum in Höhe von 100mbar(abs.) beaufschlagt. Die Temperierung der einzelnen Schüsse und der Welle des Kneters wurden so gewählt, daß sich beginnend ab dem 2. Schuss bei einer Wellendrehzahl von 150 UpM eine Produkttemperatur längs des Kneter von ca. 180 -200°C einstellte. Die über die Knetkaskade (4) produzierte Rohmischung wurde in die Zone 1 des Pilgerschritt-Kneters mit einer Produkttemperatur von ca. 150°C dosiert. In den Zonen 2 - 5 wurde sie intensiv geknetet und dabei flüchtige Bestandteile der Kautschukmassen entfernt. In den 2.-5. Schuß können Zusatzstoffe (Z) eingebracht werden. Über eine gekühlte Austragsschnecke wurde der Kautschuk ausgetragen und wurde als Produkt 4 bis 6 untersucht.

**Tabelle 3: Ergebnisse**

| Produkt: | Compression Set | Farbe B-Wert | Shore-A Härte |
|---|---|---|---|
| 4* | 21 | 14 | 39 |
| 5* | 20 | 8 | 59 |
| 6* | 21 | 12 | 70 |

| | | | |
|---|---|---|---|
| * nicht erfindungsgemäß | | | |

Zusammenfassung: Die erfindungsgemäss hergestellten Produkte 1 bis 3 zeigen leicht verbesserte Compression sets, etwas geringere Gelbfärbung und unveränderte mechanische Eigenschaften im Vergleich zu den gemäss EP 1468803 A hergestellten Produkten 4 bis 6.

## Patentansprüche

1. Kontinuierliches Verfahren zur Herstellung von Organopolysiloxanzusammensetzungen (A) mit einer bei 25°C gemessenen Viskosität von mindestens 500 Pa.s., bei dem Organopolysiloxane (O) und Füllstoffe (F) in einer ersten Verfahrensstufe in einer Knetkaskade mit wenigstens zwei in Reihe nebeneinander angeordneten Knetkammern, die jeweils zwei achsparallele, gleich- oder gegensinnig antreibbare Knetwerkzeuge enthalten und die durch quer zu den Achsen der Knetwerkzeuge passierbare Öffnungen miteinander verbunden sind, wobei die erste Knetkammer eine Beschickungsöffnung und die letzte Knetkammer eine Austragsöffnung aufweisen, zu Rohmischungen vermischt und geknetet werden und die Rohmischungen in einer zweiten Verfahrensstufe in einem kontinuierlich betriebenen Doppelmuldenkneter mit Austragsschnecke bei 100°C bis 250°C geknetet und entgast werden.

2. Verfahren nach Anspruch 1, bei dem die Knetkaskade aus 3 bis 10 Knetkammern besteht.

3. Verfahren nach Anspruch 1 oder 2, bei dem die mittlere Verweilzeit der Organopolysiloxanzusammensetzungen (A) im Doppelmuldenkneter 30 min bis 3 h beträgt.

4. Verfahren nach Anspruch 1 bis 3, bei dem der Füllgrad des Doppelmuldenkneters bei 40 bis 60% konstant gehalten wird.

5. Verfahren nach Anspruch 1 bis 4, bei dem der Füllstoffgehalt der Organopolysiloxanzusammensetzungen (A) bei 5 bis 80 Gew.-% liegt.

6. Verfahren nach Anspruch 1 bis 5, bei dem als Füllstoffe (F) Kieselsäuren mit einer spezifischen Oberfläche nach BET von mindestens 50 m²/g eingesetzt werden.

7. Verfahren nach Anspruch 1 bis 6, bei dem als Organopolysiloxane (O) Polydimethylsiloxane eingesetzt werden, deren Moleküle der allgemeinen Formel (3)
(ViMe₂SiO₁/₂)_{c}(ViMeSiO)_{d}(Me₂SiO)ₑ(Me₃SiO_{1/2})_{f} (3),
entsprechen, wobei Vi Vinylrest und Me Methylrest bedeuten, die nichtnegativen ganzen Zahlen c, d, e und f folgende Relationen erfüllen: c+d ≥ 1, c+f = 2, 1000<(d+e)<9000, vorzugsweise 3000<(d+e)<7000, und 0<(d+1)/(d+e)<1, vorzugsweise 0<(d+1)/(d+e)<0.1.

8. Verfahren nach Anspruch 1 bis 7, bei dem als Strukturverbesserer (S) Organopolysiloxane mit einer bei 25°C gemessenen Viskosität von 10 bis 200 mPa.s zugesetzt werden.

## Claims

1. Continuous process for preparing organopolysiloxane compositions (A) having a viscosity measured at 25°C of at least 500 Pa.s., wherein organopolysiloxanes (O) and fillers (F) are, in a first process stage, mixed and kneaded in a kneading cascade having at least two kneading chambers which are arranged in series next to one another and each contain two kneading tools which have parallel axes and are capable of being driven in corotating or counterrotating directions and which are connected to one another by means of openings through which material can pass in a direction transverse to the axes of the kneading tools, with the first kneading chamber having a feed opening and the last kneading chamber having a discharge opening, to give raw mixtures and the raw mixtures are, in a second process stage, kneaded and degassed in a continuously operated double trough kneader having a discharge screw at from 100°C to 250°C.

2. Process according to Claim 1, wherein the kneading cascade comprises from 3 to 10 kneading chambers.

3. Process according to Claim 1 or 2, wherein the average residence time of the organopolysiloxane compositions (A) in the double trough kneader is from 30 min to 3 h.

4. Process according to any of Claims 1 to 3, wherein the degree of fill of the double trough kneader is kept constant at from 40 to 60%.

5. Process according to any of Claims 1 to 4, wherein the filler content of the organopolysiloxane compositions (A) is from 5 to 80% by weight.

6. Process according to any of Claims 1 to 5, wherein silicas having a specific surface area determined by the BET method of at least 50 m²/g are used as fillers (F).

7. Process according to any of Claims 1 to 6, wherein polydimethylsiloxanes whose molecules have the general formula (3)
(ViMe₂SiO_{1/2})_{c}(ViMeSiO)_{d}(Me₂SiO)ₑ(Me₃SiO_{1/2})_{f} (3)
where **Vi** is a vinyl radical and **Me** is a methyl radical, and the non-negative integers **c**, **d, e** and **f** obey the following relationships: **c+d ≥** 1, **c+f** = 2, 1000<(**d+e**)<9000, preferably 3000<(**d+e**)<7000, and 0<(d+1)/(**d+e**)<1, preferably 0<(**d**+1)/(**d+e**)<0.1, are used as organopolysiloxanes (O).

8. Process according to any of Claims 1 to 7, wherein organopolysiloxanes having a viscosity measured at 25°C of from 10 to 200 mPa.s are added as structure improvers (S).

## Revendications

1. Procédé continu pour la préparation de compositions d'organopolysiloxane (A) présentant une viscosité mesurée à 25°C d'au moins 500 Pa.s., dans lequel des organopolysiloxanes (O) et des charges (F) sont mélangés et malaxés en mélanges bruts dans une première étape de procédé dans une cascade de malaxage comportant au moins deux chambres de malaxage disposées en série l'une à côté de l'autre, qui contiennent à chaque fois deux outils de malaxage à axes parallèles, pouvant être entraînés dans un sens identique ou en sens contraires et qui sont reliées l'une à l'autre par des ouvertures pouvant être traversées transversalement par rapport aux axes des outils de malaxage, la première chambre de malaxage présentant une ouverture d'alimentation et la dernière chambre de malaxage présentant une ouverture d'évacuation, et les mélanges bruts sont malaxés et dégazés à 100°C jusqu'à 250°C dans une deuxième étape de procédé dans un malaxeur à double auge exploité en continu, présentant des vis sans fin d'évacuation.

2. Procédé selon la revendication 1, la cascade de malaxage étant constituée par 3 à 10 chambres de malaxage.

3. Procédé selon la revendication 1 ou 2, le temps de séjour moyen des compositions d'organopolysiloxane (A) dans le malaxeur à double auge étant de 30 min à 3 h.

4. Procédé selon les revendications 1 à 3, le degré de remplissage du malaxeur à double auge étant maintenu constant à 40 jusqu'à 60%.

5. Procédé selon les revendications 1 à 4, la teneur en charges des compositions d'organopolysiloxane (A) étant de 5 à 80% en poids.

6. Procédé selon les revendications 1 à 5, des silices présentant une surface spécifique selon BET d'au moins 50 m²/g étant utilisées comme charges (F).

7. Procédé selon les revendications 1 à 6, des polydiméthylsiloxanes dont les molécules correspondent à la formule générale (3) étant utilisés comme organopolysiloxanes (O)
(ViMe₂SiO_{1/2})_{c}(ViMeSiO)_{d}(Me₂SiO)ₑ(Me₃SiO_{1/2})_{f} (3),
Vi signifiant un radical vinyle et Me un radical méthyle, les nombres entiers non négatifs c, d, e et f remplissant les relations suivantes :
c + d ≥ 1, c + f = 2, 1000 < (d + e) < 9000, de préférence 3000 < (d + e) < 7000, et 0 < (d + 1) / (d + e) < 1, de préférence 0 < (d + 1) / (d + e) < 0,1.

8. Procédé selon les revendications 1 à 7, des organopolysiloxanes présentant une viscosité mesurée à 25°C de 10 à 200 mPa.s étant ajoutés comme agent d'amélioration de la structure (S).
